(19) Europäisches Patentamt

European Patent Office

Office européen des brevets

(11) **EP 1 140 546 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.[7]: **B60K 28/16**, B60K 23/08

(21) Anmeldenummer: **00967521.6**

(86) Internationale Anmeldenummer:
**PCT/DE2000/002733**

(22) Anmeldetag: **12.08.2000**

(87) Internationale Veröffentlichungsnummer:
**WO 2001/028802 (26.04.2001 Gazette 2001/17)**

(54) **VERFAHREN UND VORRICHTUNG ZUR EINSTELLUNG DES ANTRIEBSMOMENTS EINER BRENNKRAFTMASCHINE EINES KRAFTFAHRZEUGS ZUM SCHUTZ VON DIFFERENTIALGETRIEBEN DES KRAFTFAHRZEUGS**

METHOD AND DEVICE FOR ADJUSTING THE DRIVE TORQUE OF AN INTERNAL COMBUSTION ENGINE OF A VEHICLE FOR PROTECTING DIFFERENTIAL GEARBOXES OF THE VEHICLE

PROCEDE ET DISPOSITIF POUR COMMANDER LE COUPLE D'UN MOTEUR A COMBUSTION INTERNE D'UN VEHICULE AUTOMOBILE POUR PROTEGER DES DIFFERENTIELS DU VEHICULE

(84) Benannte Vertragsstaaten:
**DE FR GB**

(30) Priorität: **16.10.1999 DE 19950035**

(43) Veröffentlichungstag der Anmeldung:
**10.10.2001 Patentblatt 2001/41**

(73) Patentinhaber: **ROBERT BOSCH GMBH**
**70442 Stuttgart (DE)**

(72) Erfinder: **ERBAN, Andreas**
**74321 Bietigheim-Bissingen (DE)**

(56) Entgegenhaltungen:
**EP-A- 0 321 894        DE-A- 3 421 776**
**DE-A- 19 837 521       US-A- 5 850 616**

• **Bosch, Kraftfahrtechnisches Taschenbuch, 21. Auflage 1991, VDI-Verlag Düsseldorf (DE), Seite 559, letzter Absatz**

EP 1 140 546 B1

**Beschreibung**

Stand der Technik

Die Erfindung geht aus von einem Verfahren bzw. einer Vorrichtung zur Einstellung des Ausgangsmoments einer Brennkraftmaschine eines Kraftfahrzeugs mit den Merkmalen der Oberbegriffe der unabhängigen Ansprüche.
Aus dem Stand der Technik sind zur Übertragung des Motorausgangsmoment auf die Antriebsräder sogenannte Ausgleichsgetriebe beziehungsweise Differentialgetriebe bekannt. Diese dienen in erster Linie dazu, Drehzahlunterschiede zwischen den angetriebenen Rädern einer Achse, beispielsweise während einer Kurvenfahrt, auszugleichen. Einer Antriebsachse ist dabei in der Regel ein mechanisches Differentialgetriebe, ein sogenanntes Querdifferential, zugeordnet.
Ist mehr als eine Achse angetrieben, beispielsweise bei Allradfahrzeugen, so ist darüber hinaus ein weiteres Ausgleichsgetriebe beziehungsweise Differentialgetriebe (Längsdifferential) vorhanden, um in erster Linie Drehzahlunterschiede zwischen den angetriebenen Achsen auszugleichen.
Mechanische Differentialgetriebe können allerdings nur in begrenztem Umfang Drehzahlunterschiede zwischen dem linken bzw. rechten Rad beziehungsweise der Hinter- und Vorderachse ausgleichen. Überschreiten die Differenzdrehzahlen einen kritischen Grenzwert, so wird das Differential (und der Reifen) durch die zu hohen Fliehkräfte zerstört. Das Fahrzeug ist nicht mehr fahrbar und eine teuere Instandsetzung der betroffenen Teile ist die Folge.
Allradfahrzeuge werden aus Kostengründen zunehmend mit offenen Differentialen ausgerüstet. Um auch bei beispielsweise bei einem durchdrehenden Rad einer Achse noch ein Antriebsmoment auf das andere Rad der Achse übertragen zu können, kommen, insbesondere bei Geländefahrzeugen, Differentialgetriebe zum Einsatz, die mechanisch gesperrt werden können. Ebenso kann das Längsdifferentialgetriebe sperrbar ausgelegt werden, so daß auch bei zwei durchdrehenden Rädern einer Achse ein Antriebsmoment auf die andere Achse wirksam werden kann.
Diese Sperrenfunktion kann jedoch bei mechanisch nicht sperrbar ausgelegten, sogenannten offenen Differentialen, auch durch einen geregelten einseitigen Bremseneingriff (BMR, Bremsmomentenregelung) bzw. bei Allradfahrzeugen zusätzlich durch einen achsweisen Bremseneingriff realisiert werden. Das durchdrehende Rad beziehungsweise die durchdrehenden Räder einer Achse kann beziehungsweise können gezielt beziehungsweise radindividuell gebremst werden.
Gerade bei Allradfahrzeugen mit offenen Differentialen können die Differentiale jedoch sehr schnell geschädigt werden, wenn drei Räder stillstehen (z.B. auf Asphalt) und nur ein Rad auf einer Eisplatte steht (oder "in der Luft hängt") und der Fahrer den Motor im eingekuppelten Zustand "hochdrehen" läßt. Sorgt jetzt der einseitige Bremseneingriff nicht für ein Abbremsen dieses Rades, wirkt das gesamte Antriebsmoment auf dieses eine Rad beschleunigend. Dabei ist das Drehzahlverhältnis Motor/Rad doppelt so hoch wie bei einem Fahrzeug mit konventionellem Antrieb. Ein Einzelrad kann dabei innerhalb von einer Sekunde auf mehrere hundert km/h beschleunigt werden. Dies geschieht besonders dann, wenn auch noch Fehlschaltungen seitens des Automatikgetriebes auftreten. Der Reifen kann durch diese enormen Fliehkräfte zerstört oder zumindest in seiner Struktur derart geschädigt werden, daß es zu späterer Zeit zu einem Platzen des Reifens mit fatalen Konsequenzen kommen kann.
Auch wenn die verwendeten Differentiale mechanisch robust aufgebaut sind und sehr hohe Differenzdrehzahlen zumindest kurzzeitig vertragen, so ist die Standfestigkeit der Reifen ein ernstes Thema. Besonders wenn es sich um Geländereifen handelt, die ohnehin nicht für sehr hohe Fahrgeschwindigkeiten ausgelegt sind.
Aus der US 5,850,616 ist eine Vorrichtung zur Einstellung des Sollmotormoments einer Brennkraftmaschine bei einem Kraftfahrzeug mit wenigstens vier an wenigstens zwei Achsen angeordneten und durch die Brennkraftmaschine angetriebenen Rädern bekannt, welche zwei Querdifferentialgetriebe und ein Längsdifferentialgetriebe aufweist. Weiterhin werden die Radgeschwindigkeiten erfasst. Abhängig von den Radgeschwindigkeiten werden die Schlupfwerte der Räder berechnet und mit Sollschlupfwerten verglichen. Das Ausgangsmoment der Brennkraftmaschine wird im Sinne einer Erniedrigung eingestellt, wenn beim Rad mit der größten Radgeschwindigkeit die Differenz zwischen Radschlupf und Soilschlupf einen Grenzwert übersteigt.
Die Oberbegriffe der unabhängigen Ansprüche sind der US 5,850,616 entnommen.
Die Aufgabe der Erfindung besteht darin, mit einfachen Mitteln einen wirksamen Differential- bzw. Reifenschutz zu gewährleisten.
Diese Aufgabe wird durch die kennzeichnenden Merkmale der unabhängigen Ansprüche gelöst

Vorteile der Erfindung

Die Erfindung betrifft in einer ersten Variante ein Verfahren bzw. eine Vorrichtung zur Einstellung des Ausgangsmoments einer Brennkraftmaschine bei einem Kraftfahrzeug mit wenigstens vier an wenigstens zwei Achsen angeordneten und durch die Brennkraftmaschine angetriebenen Rädern. Zur Übertragung des Antriebs ist wenigstens ein Querdifferentialgetriebe, das einer Achse mit angetriebenen Rädern zugeordnet ist, und ein Längsdifferentialgetriebe, das zwei Achsen mit angetriebenen Rädern zugeordnet ist, vorgesehen. Für den Antriebsfall des Fahrzeugs ist eine deaktivierbare radindividuellen Steuerung (BMR) der Bremswirkung an den Rädern und/oder eine Steuerung (AMR) des Ausgangsmoments der Brennkraftmaschine vorgesehen. Der Kern der Erfindung besteht darin, daß bei einer deaktivierten radindividuellen Steuerung der Bremswirkung und/oder Steuerung des Ausgangsmoments der Brennkraftmaschine

- Drehzahlgrößen erfaßt werden, die die Drehbewegungen der Fahrzeugräder repräsentieren, und
- abhängig von den Drehzahlgrößen Differenzgrößen gebildet werden, die die Drehzahl- und/oder Drehgeschwindigkeitsdifferenzen an den Ausgängen der Differentialgetriebe repräsentieren, und
- die Differenzgrößen mit vorgebbaren ersten Schwellenwerten verglichen werden, und
- das Ausgangsmoment der Brennkraftmaschine im Sinne einer Erniedrigung eingestellt wird, wenn wenigstens ein Schwellenwert überschritten wird.

Zum Hintergrund der Erfindung folgendes:

Im "Normalfall" verhindert im Antriebsfall die eingangs beschriebene Sperrenregelung durch aktives radindividuelles Bremsen (BMR) zu hohe Differenzdrehzahlen an den Ausgängen der Differentiale. Es gibt aber eine Reihe von Möglichkeiten, die zu einer Deaktivierung der Bremsmomentenregelung (BMR) führen:

- Der Fahrer bremst im Antriebsfall bewußt, beispielsweise im Gelände (offroad), oder unbewußt (Zweifußfahrer).
- Die Bremsmomentenregelung (BMR) an einem Rad kann wegen einer vermuteten Überhitzung der Radbremse deaktiviert sein.
- Ebenso kann eine mangelhafte Bremsleistung an einem bestimmten Rad, beispielsweise durch eine defekte Radbremse, zu einer Unwirksamkeit der BMR führen.

Neben der Bremsmomentenregelung (BMR) kann auch eine Antriebsmomentenregelung (AMR) vorgesehen sein, die das an den Rädern wirksame Antriebsmoment derart einstellt, daß kein übermäßiger Antriebsschlupf auftreten kann. Die Antriebsmomentenregelung (AMR) kann, beispielsweise durch den Fahrer, deaktiviert werden. Dies kann beispielsweise dann geschehen, wenn der Fahrer eine Fahrstabilitätsregelung abschaltet.

Die radindividuellen Steuerung (BMR) der Bremswirkung an den Rädern kann also dann deaktiviert werden, wenn

- ein durch den Fahrer ausgelöster Bremsvorgang vorliegt und/oder
- die erfaßte Temperatur wenigstens einer Radbremseinheit einen vorgebbaren dritten Schwellenwert überschreitet und/oder
- der Fahrer die Steuerung manuell abschaltet.

Erfindungsgemäß wird das oben beschriebene Problem dadurch gelöst, indem man die Differenzdrehzahlen durch Auswertung der Raddrehzahlen berechnet und überwacht. Wird ein Grenzwert überschritten, so wird das Motormoment bzw. die Motordrehzahl durch einen Regler reduziert bzw. so begrenzt, daß es zu keinen Schäden am Fahrzeug kommen kann. Auch einer Fehlbedienung seitens des Fahrers kann so wirksam begegnet werden.

In einer vorteilhaften Ausgestaltung der Erfindung in der ersten Variante ist vorgesehen, daß bei einer festgestellten Überschreitung wenigstens eines Schwellenwertes die oben erwähnte im Antriebsfall wirkende Steuerung (AMR) des Ausgangsmoments der Brennkraftmaschine aktiviert wird. Hierdurch wird gewährleistet, daß kein übermäßiger Antriebsschlupf an den Rädern auftritt.

In einer vorteilhaften Ausgestaltung der Erfindung in der zweiten Variante ist vorgesehen, daß der Grenzwert, auf den die Motorausgangsdrehzahl begrenzt wird, abhängig von dem Differentialgetriebe vorgegeben wird, dessen Differenzgröße den vorgebbaren Schwellenwert überschreitet.

Der Brennkraftmaschine ist im allgemeinen ein Schaltbeziehungsweise Automatikgetriebe nachgelagert. Bei der zweiten Variante der Erfindung kann vorgesehen sein, daß der Grenzwert, auf den die Motorausgangsdrehzahl begrenzt wird, abhängig von der momentan eingestellten Drehzahlübersetzung des Getriebes vorgegeben wird.

Weitere vorteilhafte Ausgestaltungen sind den Unteransprüchen zu entnehmen.

Zeichnung

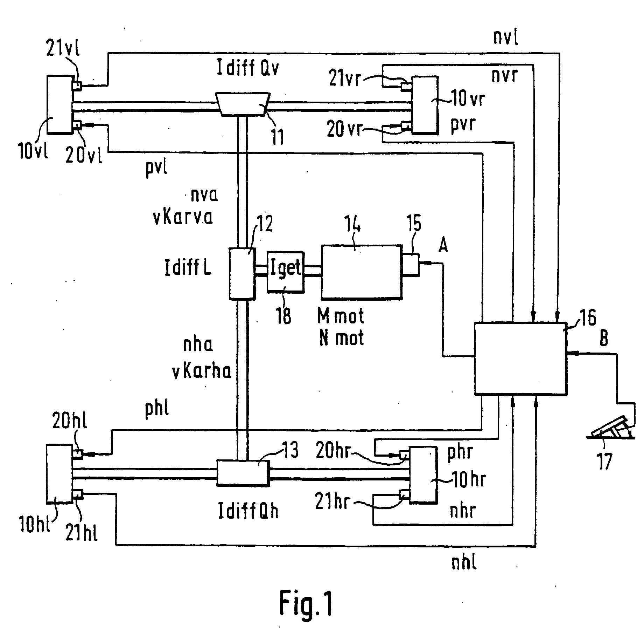

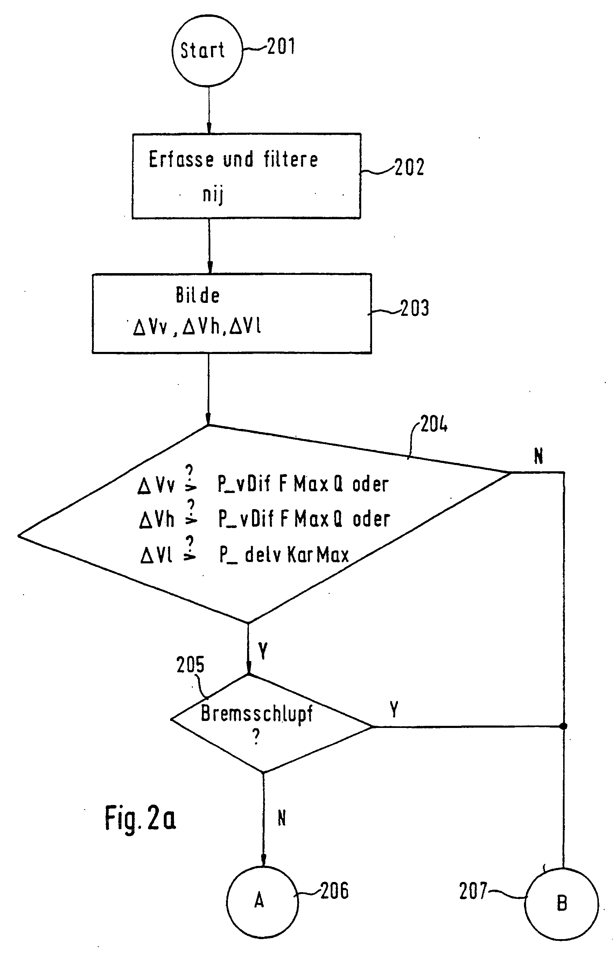

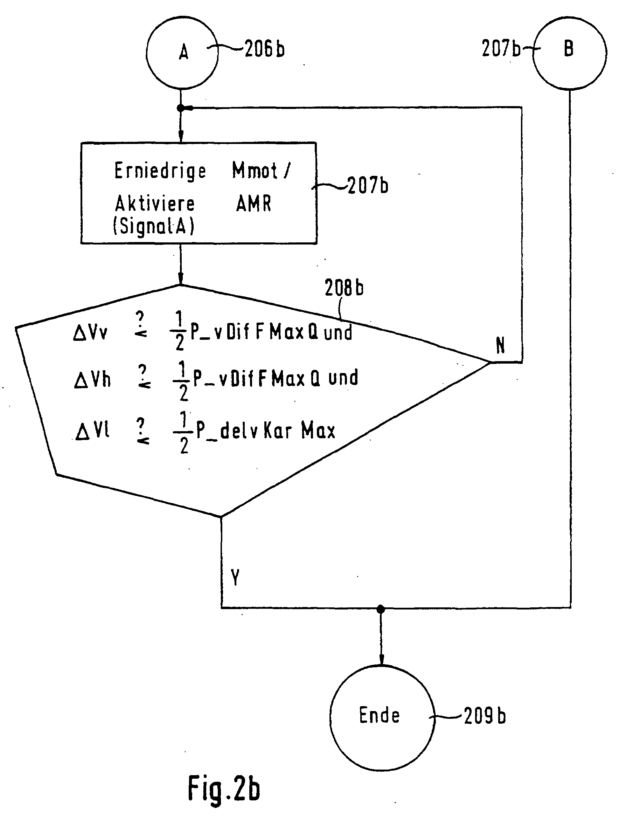

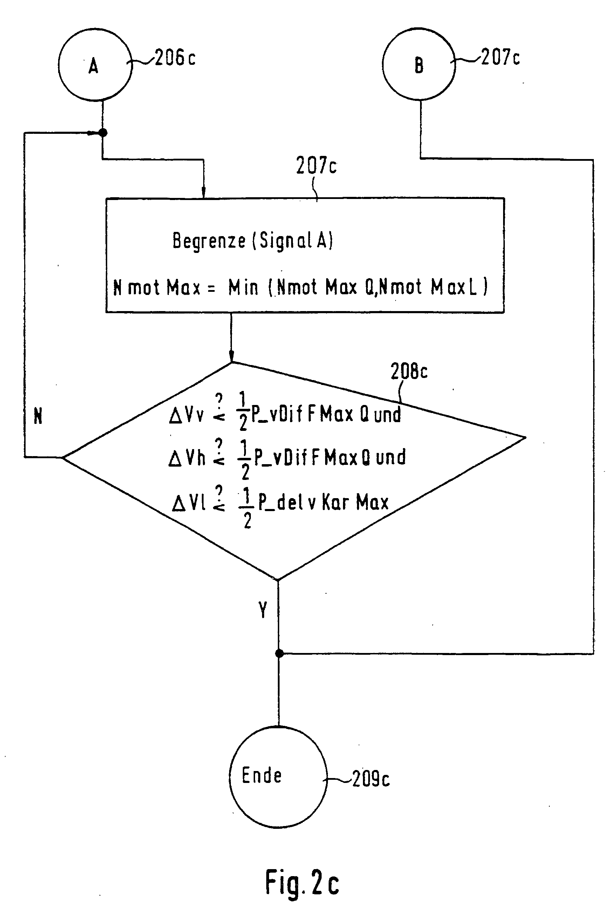

Die Figur 1 zeigt ein Übersichtsblockschaltbild der Erfindung, während in der Figur 2a und 2b die erste Erfindungsvariante und in der Figur 2a und 2c die zweite Erfindungsvariante anhand eines Ablaufdiagramms dargestellt wird.

Ausführungsbeispiel

Die Erfindung wird im folgenden anhand von Ausführungsbeispielen beschrieben.

Die Figur 1 zeigt schematisch ein vierrädriges allradangetriebenes Fahrzeug, wobei mit den Bezugzeichen 10ij die vier Räder bezeichnet sind. Der Index i bezeichnet dabei die Zugehörigkeit des Rades zur Vorderachse (v) bzw. zur Hinterachse (h). Der Index j gibt an, ob sich das betrachtete Rad auf der rechten (r) oder auf der linken (l) Fahrzeugseite befindet.

Den Rädern 10ij sind Radbremseinheiten 20ij, die zur Einstellung einer bestimmten Bremswirkung durch die Signale pij angesteuert werden, sowie Raddrehzahlsensoren 21ij zur Erfassung der Raddrehzahlen nij zugeordnet.

Zwischen den Rädern einer Achse ist jeweils ein Querdifferential 11 und 13 und zwischen den Achsen ein Längsdifferential 12 angeordnet. Von dem Motor 14 wird das Motorausgangsmoment Mmot beziehungsweise die Motorausgangsdrehzahl Nmot über das Schalt- oder Automatikgetriebe 18 zu dem Eingang des Längsdifferentials 12 übertragen.

Der Motor wird durch die Motorsteuerung 15 gesteuert. Diese Steuerung betrifft insbesondere die Einstellung des Motorausgangsmoments Mmot beziehungsweise der Motorausgangsdrehzahl Nmot. Hierzu wird die Motorsteuerung 15 durch das Signal A von der Auswerteeinheit 16 angesteuert.

Der Auswerteeinheit 16 wird das Signal B zugeführt, das eine Betätigung des Bremspedals 17 anzeigt. Weiterhin werden der Auswerteeinheit 16 die Raddrehzahlen nij zugeleitet. Unter anderem steuert die Auswerteeinheit 16 die Radbremseinheiten 20ij durch die Signale pij an.

Anhand der Figur 2a werden die Ausführungsbeispiele erläutert.

Nach dem Startschritt 201 werden im Schritt 202 die Raddrehzahlen nij erfaßt und gefiltert, beispielsweise durch eine PT$_1$-Glied.

Im Schritt 203 werden für die Vorder- und für die Hinterachse die Beträge der Differenzgeschwindigkeiten ermittelt:

$$\Delta Vv = \Delta nv \ (\pi * Rrad)/30 = |nvr - nvl| \ (\pi * Rrad)/30$$

$$\Delta Vh = \Delta nh \ (\pi * Rrad)/30 = |nhr - nhl| \ (\pi * Rrad)/30$$

Dabei ist mit Rrad der Radradius bezeichnet.

Weiterhin wird der Betrag der Differenz $\Delta nl$ der Kardangeschwindigkeiten vkarva und vkarha an Vorder- und Hinterachse als Differenzgeschwindigkeit in Längsrichtung ermittelt:

$$vkarva = nkarva * (\pi * Rrad)/30 = [(nvr+nvl)/2] * [(\pi * Rrad)/30]$$

$$vkarha = nkarha * (\pi * Rrad)/30 = [(nhr+nhl)/2] * [(\pi * Rrad)/30]$$

$$\Delta Vl = |vkarva - vkarha|$$

Die Größen $\Delta Vv$, $\Delta Vh$ und $\Delta Vl$ stellen ein Maß für die Belastung der einzelnen Differentiale 11, 12 und 13 dar.

Im Schritt 204 werden die Größen $\Delta Vv$, $\Delta Vh$ und $\Delta Vl$ mit zulässigen ersten Grenzwerten P_vDifFMaxQ bzw. P_delvKarMax verglichen. Werden die Grenzwerte nicht überschritten, so wird über 207 direkt zum Endschritt 209b/c gegangen.

Wird allerdings ein Grenzwert durch zu hohe Antriebsschlupfwerte erreicht oder überschritten, so wird zum Schritt 205 gegangen.

Im Schritt 205 wird überprüft, ob die Größen $\Delta Vv$, $\Delta Vh$ und $\Delta Vl$ durch Differenzdrehzahlen, die durch Bremsschlupf entstehen, zustande kommen. Durch Bremsschlupf verursachte Differenzen sollen kein Ansprechen des Differentialschutzes bewirken.

In der ersten Variante, die in der Figur 2b gezeigt wird, wird bei Überschreitung wenigstens eines ersten der Grenzwerte P_vDifFMaxQ bzw. P_delvKarMax im Schritt 207b in jedem Fall durch das Signal A (Figur 1) die Antriebsmomentenregelung aktiviert um durch Rücknahme beziehungsweise Erniedrigung des Antriebsmoments Mmot eine Reduzierung der Motordrehzahl und damit eine Absenkung der Differenzdrehzahlen des jeweilig betroffenen Differentials zu erreichen.

Insbesondere bei Fahrzeugen, die bereits mit einer Antriebsmomentenregelung AMR zur Verbesserung der Fahrstabilität ausgerüstet sind, genügt es, diese zu aktivieren, da im Rahmen der AMR eingehaltenen üblichen Sollradgeschwindigkeiten deutlich unter den mechanischen Differenzdrehzahlgrenzwerten liegen.

Die Reduzierung des Motormoments aus Gründen des Differentialschutzes wird aufgehoben, sobald die Grenzwerte P_vDifFMaxQ bzw. P_delvKarMax für die zulässigen Differenzdrehzahlen deutlich unterschritten sind . Hierzu werden im Schritt 208b die Größen $\Delta Vv$, $\Delta Vh$ und $\Delta Vl$ mit zweiten Schwellenwerten P_vDifFMaxQ/2 bzw. P_delvKarMax/2 verglichen.

Nach dem Endschritt 209b wird der in der Figur 2 gezeigte Ablauf erneut durchlaufen.

Alternativ kann in der zweiten in der Figur 2c gezeigten Variante durch eine unterlagerte Drehzahlregelung eine Begrenzung der Motordrehzahl Nmot auf unkritische Werte vorgenommen werden. Dies ist immer möglich, auch bei Fahrzeugen die bisher noch nicht mit einem Antriebsschlupfregelsystem ausgerüstet sind. Allerdings muß die Möglichkeit der Reduktion des Motormoments durch mindestens eines der bekannten Verfahren möglich sein. Hierzu zählen beispielsweise eine elektrisch verstellbare Drosselklappe (EGAS), Einspritzausblendung oder Zündwinkelverstellung.

Zwischen den Raddrehzahlen nij und der Motordrehzahl Nmot besteht bei einem Fahrzeug (ohne Geländereduktion der Getriebeübersetzung) mit offenen Differentialen folgender Zusammenhang:

$$nvl + nvr + nhl + nhr = 4 * Nmot/Iges \qquad (1)$$

Für die Gesamtübersetzung Iges gilt :

$$Iges = Iget * IdiffL * IdiffQ \qquad (2)$$

Iget:    Übersetzung der jeweiligen Gangstufe des Getriebes 18.
IdiffL:    Übersetzung des Differentials 12 in Längsrichtung.
IdiffQ:    Übersetzung der Differentiale 11 und 13 in Querrichtung.

Daraus ergibt sich für die Vorderachse bzw. für die Hinterachse:

$$nvl + nvr = 4 * Nmot/Iges - nhl - nhr. \qquad (3)$$

$$nhl + nhr = 4 * Nmot/Iges - nvl - nvr. \qquad (4)$$

oder

$$nkritQva = 4 * Nmot/Iges - nhl - nhr - 2 * nvr. \qquad (5)$$

$$nkritQha = 4 * Nmot/Iges - nvl - nvr - 2 * nhr. \qquad (6)$$

mit

nkritQva = nvl - nvr: Maximal zulässige Differenzdrehzahl

an der Vorderachse.

nkritQha = nhl - nhr: Maximal zulässige Differenzdrehzahl

an Hinterachse.

Unter der Annahme, daß in dem für die Differentiale schlechtesten Fall drei Räder stillstehen und ein einzelnes Rad frei dreht, gilt mit (5) bzw. (6) folgender Zusammenhang:

$$\text{nkritQva} = 4 * \text{Nmot/Iges mit (nvr = nhl = nhr = 0)} \qquad (7)$$

$$\text{nkritQha} = 4 * \text{Nmot/Iges mit (nhr = nvl = nvr = 0)} \qquad (8)$$

Drückt man die kritische Differenzdrehzahl in Querrichtung nkritQ nach Gleichung (7) u. (8) als Radgeschwindigkeitsdifferenz (P_vDifFMaxQ) aus, so ergibt sich:

$$\text{P\_vDifFMaxQ} = \text{nkritQ} * \pi/30 * \text{Rrad.} \qquad (9)$$

mit Rrad = Radradius.

Wird also im Schritt 204 festgestellt, daß eine der Größen ∆Vv und ∆Vh die zulässige Radgeschwindigkeitsdifferenz P_vDifFMaxQ überschreitet, so wird im Schritt 207c die Motordrehzahl Nmot auf den Grenzwert NmotMaxQ durch einen unterlagerten Drehzahlregler oder die Antriebsmomentenregelung AMR begrenzt:

$$\text{NmotMaxQ} = \text{nkrit} * \text{Iges/4} \qquad (10)$$

Auch hierbei wird im Schritt 205 überprüft, ob die Differenzdrehzahlen durch Bremsschlupf zustande gekommen sind. Durch Bremsschlupf verursachte Differenzen sollen kein Ansprechen des Differentialschutzes bewirken.

Wie erwähnt muß bei einem Allradfahrzeug auch das in Längsrichtung für den notwendigen Drehzahlausgleich zwischen Vorderachse und Hinterachse sorgende Längsdifferential 12 vor zu hohen Differenzdrehzahlen geschützt werden.

Für die Achsantriebe gelten folgende Drehzahlen:

$$\text{nva} = \text{IdiffQv} * \text{(nvl + nvr)/2 .} \qquad (11)$$

$$\text{nha} = \text{IdiffQh} * \text{(nhl + nhr)/2 .} \qquad (12)$$

Für die mittlere Radgeschwindigkeit der jeweiligen Achse erhält man :

$$\text{vKarva} = (\pi * \text{Rrad/30}) * \text{(nvl + nvr)/2} \qquad (13)$$

$$\text{vKarha} = (\pi * \text{Rrad/30}) * \text{(nhl + nhr)/2} \qquad (14)$$

Für die maximal zulässige Differenzdrehzahl in Längsrichtung nkritL gilt:

$$\text{nkritL} = |\text{nva - nha}| \qquad (15)$$

oder mit Gl. (11) bis (15):

$$\text{nkritL} = \text{IdiffQ} * (30/(\pi * \text{Rrad})) * |\text{vKarva - vKarha}| \qquad (16)$$

Für die Differenz der Kardangeschwindigkeiten delvKar gilt:

$$\text{delvKar} = (\text{vKarva - vKarha}) \qquad (17)$$

und für den zulässigen Grenzwert :

$$P\_delvKarMax = nkritL * IdiffQ * (\pi * Rrad/30) \qquad (18)$$

Wird im Schritt 204 festgestellt, daß die zulässige Differenz der Kardangeschwindigkeiten P_delvKarMax überschritten wird, so muß die Motordrehzahl Nmot auf den Grenzwert NmotMaxL durch einen unterlagerten Drehzahlregler begrenzt werden:

$$NmotMaxL = nkritL * Iget * IdiffL /4 . \qquad (19)$$

Bei einem Allradfahrzeug mit Quer- und Längsdifferential wird die Motordrehzahl Nmot somit im Schritt 207c auf den Wert

$$NmotMax = Min (NmotMaxQ, NmotMaxL) \qquad (20)$$

begrenzt. Dies geschieht durch eine entsprechende Abgabe des Signals A (Figur 1).

Die Reduzierung des Motormoments aus Gründen des Differentialschutzes wird aufgehoben, sobald die Grenzwerte P_vDifFMaxQ bzw. P_delvKarMax für die zulässigen Differenzdrehzahlen deutlich unterschritten sind . Hierzu werden im Schritt 208c die Größen $\Delta Vv$, $\Delta Vh$ und $\Delta Vl$ mit zweiten Schwellenwerten P_vDifFMaxQ/2 bzw. P_delvKarMax/2 verglichen.

Nach dem Endschritt 209c wird der in der Figur 2 gezeigte Ablauf erneut durchlaufen.

In dem in der Figur 2 gezeigten Ablauf kann zusätzlich auch eine Zeitabfrage vorgesehen sein. Die Maßnahmen der Schritte 207 b beziehungsweise 207c werden dann erst eingeleitet, wenn die im Schritt 204 festgestellte Überschreitung eines Schwellenwertes hinreichend lang vorliegt.

Zusammenfassend ist zu bemerken, daß der Kern und Vorteil der Erfindung in der Berechnung und Überwachung der Differenzgeschwindigkeiten bzw. der Differenzdrehzahlen in Querrichtung beliebiger Fahrzeuge (Front, Heck und Allrad) sowie die beim Allrad zusätzlich in Längsrichtung vorhandene Differenz der Kardangeschwindigkeiten besteht. Bei Überschreiten vorgegebener Grenzwerte findet ein automatisches Reduzieren des Antriebsmoments bzw. eine automatische Begrenzung der Motordrehzahl auf ein verträgliches Maß statt.

Diese Schutzfunktion für die Differentiale läßt sich nicht abschalten und ist auch bei passiv geschalteter Antriebsmomentenregelung AMR verfügbar. Sie ist lediglich durch Software unter Ausnutzung bereits vorhandener Sensoren und Stellereinrichtungen realisierbar. Der Applikationsaufwand ist minimal.

**Patentansprüche**

1. Verfahren zur Einstellung des Ausgangsmoments (Mmot) einer Brennkraftmaschine (14) eines Kraftfahrzeugs mit wenigstens vier an wenigstens zwei Achsen angeordneten und durch die Brennkraftmaschine angetriebenen Rädern (10ij) und mit wenigstens einem Querdifferentialgetriebe (11, 13), das einer Achse mit angetriebenen Rädern zugeordnet ist, und mit einem Längsdifferentialgetriebe (12), das zwei Achsen mit angetriebenen Rädern zugeordnet ist, und mit einer für den Antriebsfall des Fahrzeugs vorgesehenen und deaktivierbaren radindividuellen Steuerung (BMR) der Bremswirkung an den Rädern und/oder Steuerung (AMR) des Ausgangsmoments der Brennkraftmaschine, wobei Drehzahlgrößen (nij) erfaßt werden, die die Drehbewegungen der Fahrzeugräder (10ij) repräsentieren,
**dadurch gekennzeichnet, dass** bei einer deaktivierten radindividuellen Steuerung der Bremswirkung

   - abhängig von den Drehzahlgrößen Differenzgrößen ($\Delta Vv$, $\Delta Vh$, $\Delta Vl$) gebildet werden, die die Drehzahl- und/ oder Drehgeschwindigkeitsdifferenzen zwischen den linken und den rechten Rädern an den Ausgängen der Querdifferentialgetriebe (11, 13) und zwischen den Kardangeschwindigkeiten an den Ausgängen des Längsdifferentialgetriebes (12) repräsentieren, und
   - die Differenzgrößen mit vorgebbaren ersten Schwellenwerten (P_vDifFMaxQ, P_delvKarMax) verglichen werden, und
   - das Ausgangsmoment (Mmot) der Brennkraftmaschine im Sinne einer Erniedrigung eingestellt wird, wenn wenigstens einer der ersten Schwellenwerte überschritten wird.

**2.** Verfahren nach Anspruch 1, **dadurch gekennzeichnet, dass** das Ausgangsmoment (Mmot) der Brennkraftmaschine soweit erniedrigt wird, bis die Differenzgrößen zweite Schwellenwerte. (P_vDifFMaxQ/2, P_delvKarMax/2) unterschreiten.

**3.** Verfahren nach Anspruch 1, **dadurch gekennzeichnet, daß** bei Überschreitung wenigstens eines der ersten Schwellenwerte die im Antriebsfall wirkende Steuerung (AMR) des Ausgangsmoments der Brennkraftmaschine aktiviert wird.

**4.** Verfahren nach Anspruch 1, **dadurch gekennzeichnet, daß** die für den Antriebsfall des Fahrzeugs vorgesehene radindividuelle Steuerung (BMR) der Bremswirkung an den Rädern dann deaktiviert wird, wenn

- ein durch den Fahrer ausgelöster Bremsvorgang vorliegt und/oder
- die erfaßte Temperatur wenigstens einer Radbremseinheit einen vorgebbaren dritten Schwellenwert überschreitet und/oder
- der Fahrer die radindividuelle Steuerung manuell abschaltet.

**5.** Vorrichtung zur Einstellung des Ausgangsmoments (Mmot) einer Brennkraftmaschine (14) eines Kraftfahrzeugs mit wenigstens vier an wenigstens zwei Achsen angeordneten und durch die Brennkraftmaschine angetriebenen Rädern (10ij) und mit wenigstens einem Querdifferentialgetriebe (11, 13), das einer Achse mit angetriebenen Rädern zugeordnet ist, und mit einem Längsdifferentialgetriebe (12), das zwei Achsen mit angetriebenen Rädern zugeordnet ist, und mit einer für den Antriebsfall des Fahrzeugs vorgesehenen und deaktivierbaren radindividuellen Steuerung (BMR) der Bremswirkung an den Rädern und/oder Steuerung (AMR) des Ausgangsmoments der Brennkraftmaschine,
welche Raddrehzahlsensoren (ij) zur Erfassung von Drehzahlgrößen (nij) aufweisen, die die Drehbewegungen der Fahrzeugräder (10ij) repräsentieren,
**dadurch gekennzeichnet dass**
Mittel (16) enthalten sind, die bei einer deaktivierten radindividuellen Steuerung der Bremswirkung

- abhängig von den Drehzahlgrößen Differenzgrößen (ΔVv, ΔVh, ΔVl) bilden, die die Drehzahl- und/oder Drehgeschwindigkeitsdifferenzen zwischen den linken und den rechten Rädern an den Ausgängen der Querdifferentialgetriebe (11, 13) und zwischen den Kardangeschwindigkeiten an den Ausgängen des Längsdifferentialgetriebes (12) repräsentieren, und
- die Differenzgrößen mit vorgebbaren ersten Schwellenwerten (P_vDifFMaxQ, P_delvKarMax) vergleichen, und
- eine Einstellung des Ausgangsmoment (Mmot) der Brennkraftmaschine im Sinne einer Erniedrigung einstellen, wenn wenigstens einer der ersten Schwellenwerte überschritten ist.

**6.** Vorrichtung nach Anspruch 5, **dadurch gekennzeichnet, daß** die Mittel (16) bei Überschreitung wenigstens eines der ersten Schwellenwerte eine Aktivierung der im Antriebsfall wirkende Steuerung (AMR) des Ausgangsmoments der Brennkraftmaschine aktivieren.

**7.** Vorrichtung nach Anspruch 5, **dadurch gekennzeichnet, daß** die Mittel (16) die radindividuellen Steuerung (BMR) der Bremswirkung an den Rädern dann deaktivieren, wenn

- ein durch den Fahrer ausgelöster Bremsvorgang vorliegt und/oder
- die erfaßte Temperatur wenigstens einer Radbremseinheit einen vorgebbaren dritten Schwellenwert überschreitet und/oder
- der Fahrer die radindividuelle Steuerung manuell abschaltet.

**Claims**

**1.** Method for adjusting the output torque (Mmot) from an internal combustion engine (14) of a motor vehicle having at least four wheels (10ij), which are arranged on at least two axles and are driven by the internal combustion engine, and having at least one transverse differential gear mechanism (11, 13), which is assigned to an axle with driven wheels, and having a longitudinal differential gear mechanism (12), which is assigned to two axles with driven wheels, and having a wheel-individual control (BMR), which is provided for the vehicle driving situation and can be deactivated, of the braking action at the wheels and/or control (AMR) of the output torque from the internal combustion engine, with rotational-speed variables (nij) which represent the rotary movements of the vehicle wheels (10ij) being recorded,
**characterized in that** with deactivated wheel-individual control of the braking action

- difference variables (ΔVv, ΔVh, ΔVl) which represent the rotational speed and/or rotational velocity differences between the left-hand and right-hand wheels at the outputs of the transverse differential gear mechanisms (11, 13) and between the universal joint velocities at the outputs of the longitudinal differential gear mechanism (12), are formed as a function of the rotational speed variables, and
- the difference variables are compared with predeterminable first threshold values (P_vDifFMaxQ, P_delvKarMax), and
- the output torque (Mmot) from the internal combustion engine is adjusted by being reduced when at least one of the first threshold values is exceeded.

2. Method according to Claim 1, **characterized in that** the output torque (Mmot) from the internal combustion engine is reduced until the difference variables drop below second threshold values (P_vDifFMaxQ/2, P_delvKarMax/2).

3. Method according to Claim 1, **characterized in that** in the event of at least one of the first threshold values being exceeded, the control (AMR), which acts in driving mode, of the output torque from the internal combustion engine is activated.

4. Method according to Claim 1, **characterized in that** the wheel-individual control (BMR), which is intended for when the vehicle is being driven, of the braking action is deactivated at the wheels when

- a braking operation is initiated by the driver, and/or
- the recorded temperature of at least one wheel-braking unit exceeds a predeterminable third threshold value, and/or
- the driver manually switches off the wheel-individual control.

5. Device for adjusting the output torque (Mmot) from an internal combustion engine (14) of a motor vehicle having at least four wheels (10ij), which are arranged on at least two axles and are driven by the internal combustion engine, and having at least one transverse differential gear mechanism (11, 13), which is assigned to an axle with driven wheels, and having a longitudinal differential gear mechanism (12), which is assigned to two axles with driven wheels, and having a wheel-individual control (BMR), which is provided for the vehicle driving situation and can be deactivated, of the braking action at the wheels and/or control (AMR) of the output torque from the internal combustion engine,
which have wheel rotational-speed sensors (ij) for recording rotational-speed variables (nij) which represent the rotational movements of the vehicle wheels (10ij),
**characterized in that**
there are means (16) which with deactivated wheel-individual control of the braking action

- form difference variables (ΔVv, ΔVh, ΔVl) which represent the rotational speed and/or rotational velocity differences between the left-hand and right-hand wheels at the outputs of the transverse differential gear mechanisms (11, 13) and between the universal joint velocities at the outputs of the longitudinal differential gear mechanism (12), as a function of the rotational speed variables, and
- compare the difference variables with predeterminable first threshold values (P_vDifFMaxQ, P_delvKarMax), and
- adjust the output torque (Mmot) from the internal combustion engine by reducing it when at least one of the first threshold values has been exceeded.

6. Device according to Claim 5, **characterized in that** the means (16), in the event of at least one of the first threshold values being exceeded, activate an activation of the control (AMR), which acts when driving, of the output torque from the internal combustion engine.

7. Device according to Claim 5, **characterized in that** the means (16) deactivate the wheel-individual control (BMR) of the braking action at the wheels when

- a braking operation is initiated by the driver, and/or
- the recorded temperature of at least one wheel-braking unit exceeds a predeterminable third threshold value, and/or
- the driver manually switches off the wheel-individual control.


**Revendications**

1. Procédé pour commander le couple de sortie (Mmot) du moteur à combustion interne (14) d'un véhicule automobile, comportant au moins quatre roues (10ij) disposées au moins sur deux essieux et entraînées par le moteur à combustion interne, et au moins un différentiel transversal (11, 13) associé à un essieu comportant des roues entraînées, et un différentiel longitudinal (12) associé à deux essieux comportant des roues entraînées, avec une commande (BMR) de freinage au niveau des roues ? individuelle pour chaque roue, prévue pour le cas d'une propulsion du véhicule et désactivable, et/ou une commande (AMR) du couple de sortie du moteur à combustion interne, avec saisies des grandeurs de vitesse de rotation (nij) qui représentent les rotations des roues (10ij) du véhicule automobile,
   **caractérisé en ce que**
   dans le cas d'une commande de freinage individuelle pour chaque roue désactivée :

   - on forme en fonction des grandeurs de vitesse de rotation, des valeurs différentielles (ΔVv, ΔVh, ΔVl) représentant les différences de vitesses de rotation entre les roues gauches et les roues droites aux sorties des différentiels transversaux (11, 13) et entre les vitesses cardan aux sorties du différentiel longitudinal (12), et
   - les valeurs différentielles sont comparées à des premières valeurs seuils prédéfinissables (P_vDiffMaxQ, P_delvKarMax), et
   - le couple de sortie (Mmot) du moteur à combustion interne est ajusté au sens d'un abaissement lorsqu'au moins une des premières valeurs seuils est dépassée.

2. Procédé selon la revendication 1,
   **caractérisé en ce que**
   le couple de sortie (Mmot) du moteur à combustion interne est abaissé jusqu'à un point où les valeurs différentielles dépassent les deuxièmes valeurs seuils (P_vDiffMaxQ/2, P_delvKarMax/2).

3. Procédé selon la revendication 1,
   **caractérisé en ce que**
   la commande (AMR) du couple de sortie du moteur à combustion interne, agissant dans le cas d'une propulsion, est activée lorsqu'il y a dépassement d'au moins une des premières valeurs seuils.

4. Procédé selon la revendication 1,
   **caractérisé en ce que**
   la commande (BMR) du freinage au niveau des roues, individuelle pour chaque roue et prévue pour le cas d'une propulsion du véhicule automobile est désactivée lorsque

   - il y a déclenchement du freinage de la part du conducteur et/ou
   - la température enregistrée d'au moins une unité de freinage de roue dépasse une troisième valeur seuil prédéfinissable et/ou
   - le conducteur déconnecte manuellement la commande individuelle pour chaque roue.

5. Dispositif pour commander le couple de sortie (Mmot) d'un moteur à combustion interne (14) d'un véhicule automobile, comportant au moins quatre roues (10ij) disposées au moins sur deux essieux et entraînées par le moteur à combustion interne, et au moins un différentiel transversal (11, 13) associé à un essieu comportant des roues entraînées, et un différentiel longitudinal (12) associé à deux essieux comportant des roues entraînées, avec une commande de freinage (BMR) individuelle pour chaque roue, prévue pour le cas d'une propulsion du véhicule et désactivable, et/ou une commande (AMR) du couple de sortie du moteur à combustion interne, ainsi que des capteurs tachymétriques (ij) servant à saisir des grandeurs de vitesses de rotation (nij) qui représentent les rotations des roues (10ij) du véhicule automobile,
   **caractérisé en ce qu'**
   il présente des moyens (16) qui, dans le cas d'une commande du freinage, désactivable et individuelle pour chaque roue :

   - forment en fonction des grandeurs de vitesses de rotation des valeurs différentielles (ΔVv, ΔVh, ΔVl) qui représentent les différences de vitesses de rotation entre les roues gauches et les roues droites aux sorties des différentiels transversaux (11, 13) et entre les vitesses cardan aux sorties du différentiel longitudinal (12),

- comparent les valeurs différentielles à des premières valeurs seuils prédéfinissables (P_vDiffMaxQ, P_delvKarMax), et
- ajustent le couple de sortie (Mmot) du moteur à combustion interne au sens d'un abaissement lorsqu'au moins une des premières valeurs seuils est dépassée.

6. Dispositif selon la revendication 5,
   **caractérisé en ce que**
   les moyens (16) activent la commande (AMR) du couple de sortie du moteur à combustion interne, agissant dans le cas d'une propulsion, lorsqu'il y a dépassement d'au moins une des premières valeurs seuils.

7. Procédé selon la revendication 5,
   **caractérisé en ce que**
   les moyens (16) désactivent la commande du freinage (BMR), individuelle pour chaque roue, au niveau des roues lorsque

   - il y a déclenchement du freinage de la part du conducteur et/ou
   - la température enregistrée d'au moins une unité de freinage de roue dépasse une troisième valeur seuil prédéfinissable et/ou
   - le conducteur déconnecte manuellement la commande individuelle pour chaque roue.

Fig.1

Start ─ 201

Erfasse und filtere
nij ─ 202

Bilde
$\Delta Vv , \Delta Vh , \Delta Vl$ ─ 203

204

$\Delta Vv \overset{?}{>}$ P_vDif F Max Q oder

$\Delta Vh \overset{?}{>}$ P_vDif F Max Q oder

$\Delta Vl \overset{?}{>}$ P_ delv Kar Max

N

Y

205

Bremsschlupf
?

Y

N

Fig. 2a

A ─ 206

207 ─ B

A ——206b

207b—B

Erniedrige Mmot /
Aktiviere AMR
(Signal A) ——207b

208b

$$\Delta Vv \overset{?}{<} \frac{1}{2} P\_vDifFMaxQ \text{ und}$$

$$\Delta Vh \overset{?}{<} \frac{1}{2} P\_vDifFMaxQ \text{ und}$$

$$\Delta Vl \overset{?}{<} \frac{1}{2} P\_delvKarMax$$

N

Y

Ende ——209b

Fig.2b

Fig. 2c